Europäisches Patentamt

European Patent Office

Office européen des brevets

(11) Veröffentlichungsnummer: **0 139 771**
**B1**

(12) **EUROPÄISCHE PATENTSCHRIFT**

(19)

(45) Veröffentlichungstag der Patentschrift:
**11.05.88**

(21) Anmeldenummer: **83109738.1**

(22) Anmeldetag: **29.09.83**

(51) Int. Cl.⁴: **B 29 C 45/67**

(54) Formschliesseinheit einer Kunststoff-Spritzgiessmaschine.

(43) Veröffentlichungstag der Anmeldung:
**08.05.85 Patentblatt 85/19**

(45) Bekanntmachung des Hinweises auf die Patenterteilung:
**11.05.88 Patentblatt 88/19**

(84) Benannte Vertragsstaaten:
**AT CH FR GB IT LI NL**

(56) Entgegenhaltungen:
**DE - A - 2 424 781
DE - C - 3 226 908
FR - A - 2 109 902**

(73) Patentinhaber: **Hehl, Karl, Arthur-Hehl-Strasse 32,
D-7298 Lossburg-1 (DE)**

(72) Erfinder: **Hehl, Karl, Arthur-Hehl-Strasse 32,
D-7298 Lossburg-1 (DE)**

(74) Vertreter: **Mayer, Friedrich, Dr. et al, Patentanwälte Dr.
Mayer & Frank Westliche 24, D-7530 Pforzheim (DE)**

## Beschreibung

Die Erfindung bezieht sich auf eine Formschliesseinheit entsprechend dem Oberbegriff des Anspruchs 1.

Bei einer bekannten Formschliesseinheit dieser Art (Prospekt der Battenfeld Kunststoffmaschinen Ges.m.b.H, Wiener Neustädter Strasse 81, A-2542 Kottingbrunn, betreffend Spritzgiessmaschinen-Baureihe S 230-460 kN Seite 12) sitzen die stationären Kolben der Kolben-Zylinder-Einheiten fest auf den Holmen auf. Die Holme weisen Abschnitte grösseren Durchmessers auf, die an den Kolben beginnen und sich rückseitig aus den mit der bewegbaren Aufspannplatte zu einer Bewegungseinheit verbundenen Zylindern heraus erstrecken. Die Länge der bei geschlossener Spritzgiessform rückseitig aus den Zylindern herausragenden Abschnitte entspricht mindestens der Länge eines maximalen Öffnungshubes. Die freien Enden der herausragenden Holme sind von einer zusätzlichen Stützplatte aufgenommen, während die rückseitigen Zylinderenden von einer Stützplatte umgriffen und dadurch stabilisiert sind. Beim Öffnen bzw. Schliessen der Spritzgiessform gleiten die Zylinderdeckel der Zylinder auf den Mantelflächen der Holme. Dies gilt auch notwendigerweise für die in diese Deckel eingelassenen Ringdichtungen, durch welche die Zylinderräume der Kolben-Zylinder-Einheiten abgedichtet sind. Da die Kolben-Zylinder-Einheiten die Spritzgiessform nicht nur öffnen und schliessen, sondern auch den Zuhaltedruck für die Spritzgiessform beim Einführen des Kunststoffmaterials in die Spritzgiessform erzeugen, sind die die Hochdruckräume giessformseitig abdichtenden Ringdichtungen während ihrer Gleitbewegung, d.h. bei Reibungsbeanspruchung extrem hohen Drücken bis zu ca. 400 bar unterworfen. Die Erfahrung hat gezeigt, dass die angesprochenen Ringdichtungen einem raschen Verschleiss unterliegen und verhältnismässig oft ausgewechselt werden müssen.

Hiervon ausgehend liegt der Erfindung die Aufgabe zugrunde, eine Formschliesseinheit der eingangs genannten Gattung derart weiterzubilden, dass den die Zylinderräume der Kolben-Zylinder-Einheiten abdichtenden Dichtungsorganen eine wesentlich höhere Lebensdauer zukommt. Diese Aufgabe wird erfindungsgemäss durch die im Kennzeichen des Anspruches 1 genannten Merkmale gelöst.

Versuche haben gezeigt, dass bei einer solchen Ausbildung den die Hochdruckräume begrenzenden Dichtringen eine Lebensdauer zukommt, die das Vielfache der bisherigen beträgt. Dies kann vermutlich nur zum Teil auf die Tatsache zurückgeführt werden, dass bei der erfindungsgemässen Lösung die die Hochdruckräume rückseitig abdichtenden Dichtungsringe stationär sind, also überhaupt keiner Reibungsbeanspruchung mehr unterworfen sind. Denn die Kolbendichtungen sind nach wie vor einer solchen Reibungsbeanspruchung unterworfen. Sie gleiten allerdings nicht auf der Mantelfläche des zugehörigen Holms sondern auf der inneren Mantelfläche des zugehörigen Zylinders. Vermutlich spielen bei der zu erzielenden höheren Lebensdauer der Dichtungsringe, die durch Versuche erwiesen ist, andere Faktoren eine wesentliche Rolle. Manches spricht dafür, dass bei den bekannten hydraulischen Systemen die Ringdichtungen durch die von ihnen überfahrenen Mantelflächen der Holme verletzt werden. Diese Mantelflächen liegen nämlich bei geöffneter Spritzgiessform im Spannraum der Spritzgiessform offen, d.h. sie sind nicht abgedeckt. Dass diese Mantelflächen unter diesen Voraussetzungen, insbesondere beim Giessformwechsel oder beim Anbau und Abbau von Sondereinheiten trotz Oberflächenveredlung der Holme mikroskopisch kleine Beschädigungen, z.B. durch Anstossen erleiden, ist für den Praktiker ohne weiteres einsichtig. Dies gilt insbesondere beim Einsatz von wenig geschultem Personal. Solche Verletzungen durch beschädigte Mantelflächen der Holme sind bei der erfindungsgemässen Lösung prinzipiell ausgeschlossen.

Bei dem erfindungsgemässen Aufbau ergibt sich der zusätzliche Vorteil einer Verkürzung der Formschliesseinheit um etwa die Länge eines Schliess- bzw. Öffnungshubes. Ferner ergibt sich der Vorteil, dass die Holme durchgehend gleichen Durchmesser aufweisen können, was fertigungstechnisch sehr günstig ist. Schliesslich entfällt eine zweite Stützplatte zur Bildung des starren Führungsrahmens, indem dieser Führungsrahmen durch die erste Stützplatte gebildet ist, an welcher die stationären Zylinder der Kolben-Zylinder-Einheiten zentriert sind. Nicht zuletzt entsprechen die Kolben-Zylinder-Einheiten mit Bezug auf die Grösse der beaufschlagten Kolbenflächen weit mehr den jeweiligen Erfordernissen unterschiedlicher Drücke beim Schliessen bzw. Öffnen der Giessformhälfte einerseits und beim Aufbau des Zuhaltedruckes andererseits. Denn die beim Zuhaltedruck beaufschlagte Kolbenfläche ist wesentlich grösser als die beim Öffnen bzw. Schliessen der Giessform beaufschlagte Kolbenfläche.

Zweckmässigerweise sitzen die Kolben der Kolben-Zylinder-Einheiten auf Hülsen, welche an der bewegbaren Aufspannplatte befestigt und je auf dem zugehörigen Holm gleitbar gelagert sind. Ihre Länge entspricht dem maximalen Öffnungs- bzw. Schliesshub (Anspruch 2). Diesbezüglich wird darauf hingewiesen, dass es seit über einem Jahrzehnt bei Spritzgiesseinheiten an sich bekannt ist, den axialen Hub der Förderschnecke mittels von Holmen der Spritzgiesseinheit durchgriffenen Kolben-Zylinder-Einheiten zu steuern, deren Kolben über Hülsen mittelbar mit der Förderschnecke verbunden sind (DE-PS 2 048 796). Hierbei liegen jedoch wesentlich andere hydraulische und bauliche Erfordernisse vor als bei einer Formschliesseinheit entsprechend dem Oberbegriff, bei welcher mit den gleichen hydraulischen Mitteln die Giessform mit kleiner Kraft geschlossen bzw. geöffnet wird und bei Drücken bis zu 400 atü der Zuhaltedruck aufzubauen ist. Bei der beanspruchten Kombination sind zudem die Zylinder der Kolben-Zylinder-Einheiten in den stationären Führungsrahmen für die bewegbare Aufspannplatte integriert. Im übrigen zeigt die historische Entwicklung, dass bei Formschliesseinheiten den bei anderen Druck-Dimensionen sich vollziehenden hydraulischen Funktionen «Antrieb» und «Zuhaltedruck» durch unterschiedliche hydraulische Mittel Rechnung getragen wurde und dabei die baulichen Konzeptionen in gänzlich andere Richtung gingen als beim Anmeldungsgegenstand (vergleiche hierzu z.B. DE-OSen 1 529 937, 3 044 137; GB-PSen 563 568, 1 460 291, 1 212 510, 1 014 093).

Nachstehend wird die Erfindung an Hand der Zeichnung an einem Ausführungsbeispiel erläutert.

Es zeigen:

Fig. 1 die Formschliesseinheit in Draufsicht, teilweise im Horizontalschnitt bei geöffneter Spritzgiessform,

Fig. 2 die Formschliesseinheit gemäss Fig. 1 bei geschlossener Spritzgiessform,

Fig. 3 die Formschliesseinheit in Rückansicht mit einer nach Linie III-III der Fig. 1 quergeschnittenen Kolben-Zylinder-Einheit,

Fig. 4 eine Variante der Formschliesseinheit in einer Darstellung entsprechend Fig. 3 und

Fig. 5 eine Variante der Formschliesseinheit.

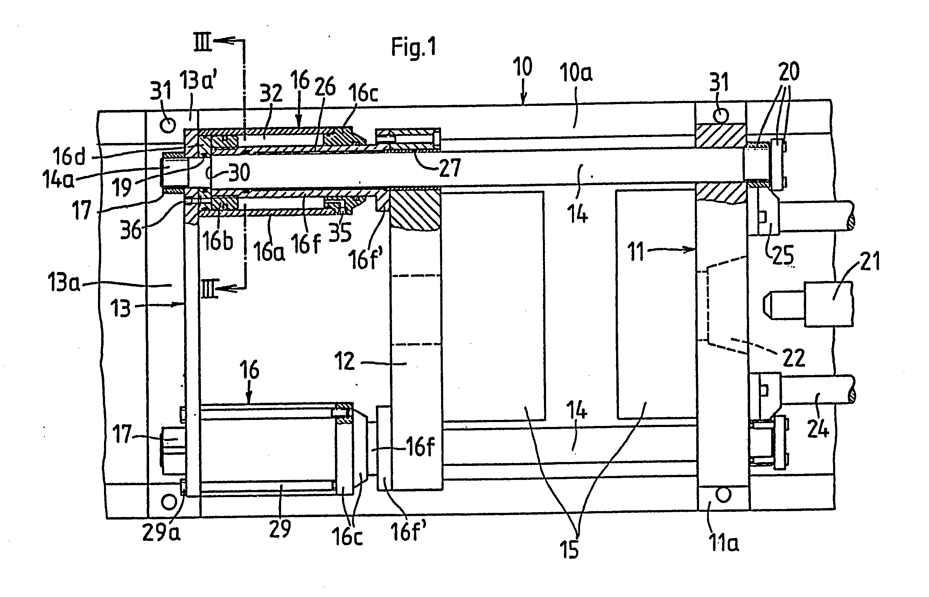

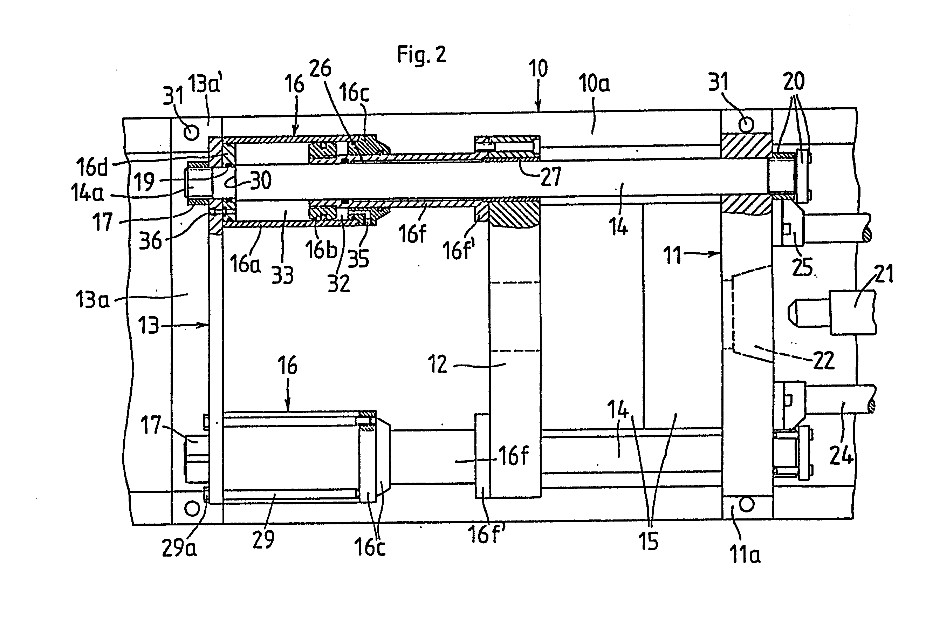

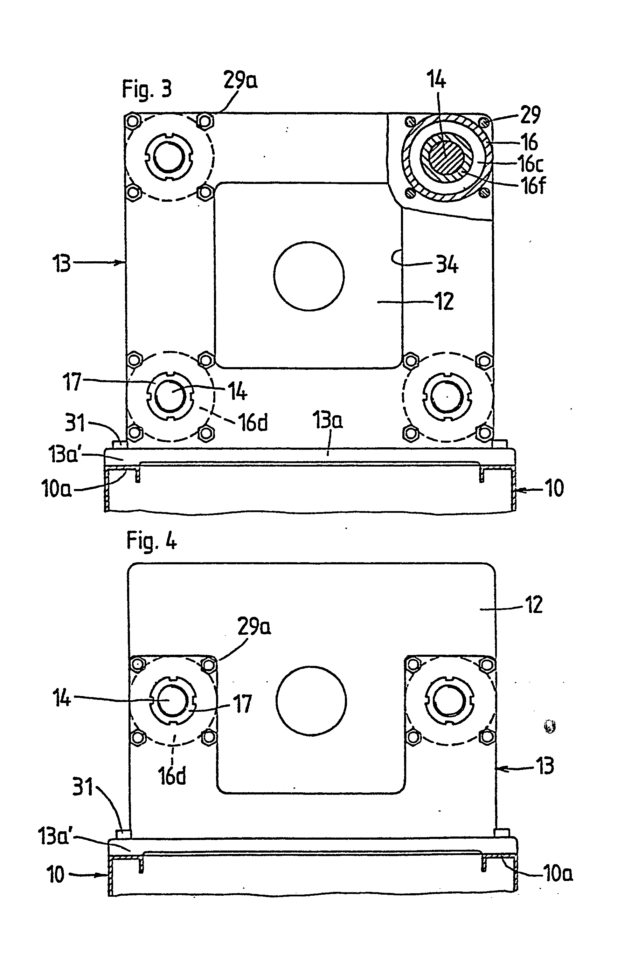

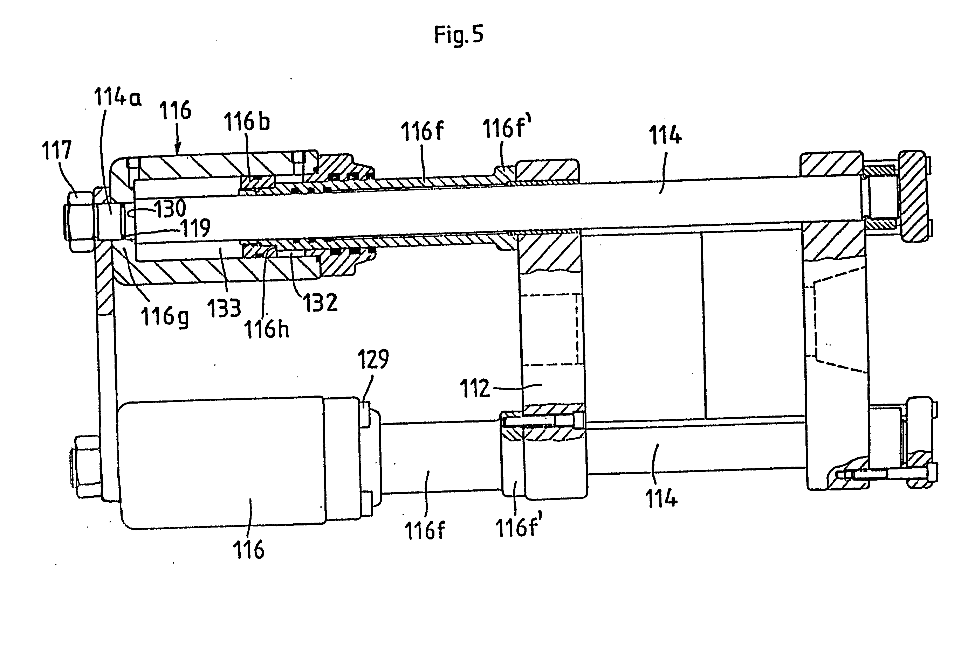

Die bewegbare Aufspannplatte 12 ist mittels hydraulischer Kolben-Zylinder-Einheiten 16 auf den Holmen 14 der vierholmigen Formschliesseinheit verschiebbar. Diese Holme sind einenends von der feststehenden Aufspannplatte 11 und anderenends von einer Stützplatte 13 aufgenommen. Mit den genannten Platten bilden die Holme einen Führungsrahmen für die bewegbare Aufspannplatte, der auf dem Maschinenfuss 10 der Kunststoff-Spritzgiessmaschine aufliegt. Die die bewegbare Aufspannplatte 12 antreibenden und darüber hinaus auch den Zuhaltedruck für die Giessform 15 erzeugenden Kolben-Zylinder-Einheiten 16 sind je von einem Holm 14 durchsetzt und am Führungsrahmen axial abgestützt. Die Kolben 16b sind über Hülsen 16f mit der bewegbaren Aufspannplatte 12 verbunden, deren Länge für einen maximalen Öffnungshub der Kolben-Zylinder-Einheiten 16 ausgelegt ist. Bei geöffneter Spritzgiessform 15 (Fig. 1) liegen die Kolben 16b an den an der Stützplatte 13 zentrierten Zylinderdeckeln 16d der zugehörigen Zylinder 16a an. Die aus der bewegbaren Aufspannplatte 12, den Hülsen 16f und den Kolben 16b bestehende Bewegungseinheit ist im Bereich der bewegbaren Aufspannplatte 12 mit Hilfe der Führungsbuchsen 27 und im Bereich der Kolben 16b an den inneren Mantelflächen der Hülsen 16f geführt. Die Hülsen 16f sind mittels endständiger Radialflansche 16f' an der bewegbaren Aufspannplatte 12 zentriert und befestigt. Die Kolben 16b sind mit den Hülsen 16f verschraubt. Aussenflächen der rückseitigen Zylinderdeckel 16d sind mit den rückseitigen Stirnkanten der Zylinder 16a bündig, die an der Stützplatte 13 anliegen. Die mit einer zentralen Ausnehmung 34 versehene und vier Holme 14 aufnehmende Stützplatte 13 ist über einen Fuss 13a auf den zweifach umgebördelten Rändern 10a der Maschinenfusswandungen mittels Schraubenbolzen 31 befestigt, welche seitliche Lagerabschnitte 13a' des Fusses 13a durchdringen. Jeder Holm 14 ist von einer Hülse 16f unter Bildung eines Ringraumes 26 umschlossen. Der Ringraum 26 ist giessformseitig von der Führungsbuchse 27 begrenzt. Bei geschlossener Giessform erstreckt sich der Ringraum axial bis etwa in Höhe des Zylinderraumes 32, der zum Öffnen der Spritzgiessform über den Anschluss 36 mit hydraulischem Medium beschickt wird. Für das Schliessen der Spritzgiessform wird der Zylinderraum 33 über den Anschluss 36 mit Drucköl versorgt, über welchen auch der Hochdruck für den Zuhaltedruck aufgebaut wird. Die Zylinderdeckel 16d sind je an einer Ringschulter 30 des zugehörigen Holmes 14 widergelagert (Fig. 1). Sie sind mit Hilfe je einer Schraubenmutter 17 auf die zugehörige Ringschulter 30 aufgepresst, welche Schraubenmutter an der Stützplatte 13 anliegt. Die giessformseitigen Zylinderdeckel 16c sind mit Hilfe von Zugstangen 29 mit der Stützplatte 13 verspannt. Die stationäre Aufspannplatte 11 sitzt über seitliche Füsse 11a auf den Rändern 10a des Maschinenfusses 10 und ist dort mittels Schraubenbolzen 31 befestigt. Die Holme 14 sind in der Aufspannplatte 11 durch Befestigungsorgane 20 gesichert. Ein Plastifizierzylinder 21 der über Holme 24 und Anschlussorgane 25 an die Aufspannplatte 11 anschliessbaren Spritzgiesseinheit hat über eine Ausnehmung 22 der Aufspannplatte Zutritt zur Spritzgiessform. Dichtungsringe 19 in den Zylinderdeckeln 16d liegen auf den Lagerzapfen 14a der Holme 14 auf. Durch den Ringraum 26 sind die Gleitflächen jeder Hülse 16f und damit auch deren Reibung stark vermindert. In den Ringraum kann ein Schmiermittel eingebracht sein, das Gleitflächen der Führungsbuchse 27 schmiert. Bei der vierholmigen Formschliesseinheit gemäss den Figuren 1–3 stellt sich infolge der Ausnehmung 34 die Stützplatte 13 als viereckiger Rahmen dar. Bei der zweiholmigen Variante gemäss Fig. 4 ist die Deckplatte 13' U-förmig gestaltet.

Im Ausführungsbeispiel der Figuren 1–3 bzw. der Fig. 4 sind die Zylinder 16a an der Stützplatte 13 anliegende Rohrabschnitte. Demgegenüber sind in der Variante gemäss Fig. 5 die Zylinder 116 der Kolben-Zylinder-Einheiten topfförmige Gussstücke, die mit planen Anlageflächen an entsprechenden Anlageflächen der Stützplatte 113 zentriert sind. Diese Gussstücke sind dadurch in den starren, stationären Führungsrahmen für die bewegbare Aufspannplatte 112 integriert, dass sie mit ihren Zylinderböden 116g an Ringschultern 130 der Holme 114 widergelagert sind. Die von den Lagerzapfen 114a durchsetzten Zylinderböden 116g sind mittels der Schraubenmuttern 117 mit der ebenfalls von den Holmen 114 durchsetzten Stützplatte 113 verspannt. Dadurch wirken auch die Anlageschultern 130, die Mantelflächen der Lagerzapfen 114a und die Anlageflächen der Schraubenmuttern als Zentrierflächen, die eine hohe Stabilität und mechanische Belastbarkeit des Führungsrahmens und damit auch eine exakte Führung der Kolben 116b in den Zylindern 116 sicherstellen. Die Kolben 116b liegen an Ringschultern 116h der Hülsen 116f an und sind in dieser Position mit bekannten Mitteln gegen axiale Verschiebung gesichert.

## Patentansprüche

1. Formschliesseinheit einer Kunststoff-Spritzgiessmaschine mit Holmen (14), die einenends von einer feststehenden Aufspannplatte (11) und anderenends von einer Stüztplatte (13, 113) aufgenommen sind und die die bewegbare Aufspannplatte (12, 112) führen, sowie mit von den Holmen durchsetzten, und an diesen Holmen axial abgestützten Kolben-Zylinder-Einheiten (16, 116), mit welchen die Spritzgiessform mit grosser Kraft zugehalten und mit kleiner Kraft geöffnet bzw. geschlossen werden kann, wobei die Kolbendichtungen auf den inneren Mantelflächen der Zylinder der Kolben-Zylinder-Einheiten (16, 116) gleiten und die die Hochdruckräum im übrigen begrenzenden Dichtringe (19, 119) an den Holmen anliegen, dadurch gekennzeichnet, dass die Kolben (16b, 116b) der an der Stützplatte (13, 113) abgestützten und zentrierten Kolben-Zylinder-Einheiten (16, 116) mit der bewegbaren Aufspannplatte (12, 112) eine Bewegungseinheit bilden, wobei die Dichtringe (19, 119) innerhalb der an der Stützplatte (13, 113) anliegenden, stationären Zylinderdeckel (16d) bzw. Zylinderböden (116g) angeordnet sind.

2. Formschliesseinheit nach Anspruch 1, dadurch gekennzeichnet, dass die Kolben (16b) mit der bewegbaren Aufspannplatte (12) über Hülsen (16f) verbunden sind, deren Länge für einen maximalen Öffnungshub der Kolben-Zylinder-Einheiten (16) ausgelegt ist.

3. Formschliesseinheit nach Anspruch 1 oder 2, dadurch gekennzeichnet, dass die Kolben (16b) bei geöffneter Spritzgiessform (15) an den an der Stützplatte (13) zentrierten Zylinderdeckeln (16d) der zugehörigen Zylinder (16a) anliegen.

4. Formschliesseinheit nach einem der vorhergehenden Ansprüche, dadurch gekennzeichnet, dass die aus der bewegbaren Aufspannplatte (12), den Hülsen (16f) und den Kolben (16b) bestehende Bewegungseinheit im Bereich der bewegbaren Aufspannplatte (12) mittels Führungsbuchsen (27) und im Bereich der Kolben (16b) an den inneren Mantelflächen der Hülsen (16f) geführt ist, wobei die Hülsen (16f) mittels der endständigen Radialflansche (16f') an der bewegbaren Aufspannplatte (12) zentriert und befestigt sind.

5. Formschliesseinheit nach einem der vorhergehenden Ansprüche 2–4, dadurch gekennzeichnet, dass die Kolben (16b) mit den Hülsen (16f) verschraubt sind und die Zylinder (16a) der Kolben-Zylinder-Einheiten (16) stirnseitig an der Stützplatte (13) anliegen.

6. Formschliesseinheit nach einem der vorhergehenden Ansprüche, dadurch gekennzeichnet, dass die mit einer zentralen Ausnehmung (34) versehene und vier Holme (14) aufnehmende Stützplatte mit Hilfe eines Fusses (13a) auf dem Maschinenfuss (10) befestigt ist.

7. Formschliesseinheit nach einem der vorhergehenden Ansprüche 2-6, dadurch gekennzeichnet, dass der Holm (14) von der Hülse (16f) unter Bildung eines Ringraumes (26) umschlossen ist, der von der Führungsbuchse (27) begrenzt ist und sich bei geschlossener Giessform axial bis etwa in Höhe des Zylinderraumes (32) erstreckt.

8. Formschliesseinheit nach einem der vorhergehenden Ansprüche, dadurch gekennzeichnet, dass die Zylinderdeckel (16d) je an einer Ringschulter (30) des zugehörigen Holmes widergelagert und dort mittels einer Schraubenmutter (17) aufgepresst sind, die mit dem Holm (14) im Eingriff steht und an der Stützplatte (13) anliegt und dass die giessformseitigen Zylinderdeckel (16c) mit Hilfe von Zugstangen (29) mit der Stützplatte (13) verspannt sind.

9. Formschliesseinheit nach einem der vorhergegenden Ansprüche 1-4, dadurch gekennzeichnet, dass die Zylinder (116) der Kolben-Zylinder-Einheiten durch topfförmige Gussstücke (aus Gusseisen) gebildet sind, deren Zylinderböden (116g) mit planen Anlageflächen an der Stützplatte (113) zentriert sind, wobei die je an einer Ringschulter (130) des zugehörigen Holmes (114) widergelagerten Zylinderböden (116g) mit der Stützplatte (113) mittels einer Schraubenmutter (117) miteinander verspannt sind.

10. Formschliesseinheit nach Anspruch 9, dadurch gekennzeichnet, dass die Kolben (116b) an Ringschultern (116h) der Hülsen (116f) anliegen.

## Claims

1. A die closing unit of an injection molding machine processing plastic material which includes tie rods (14), which are fastened at one end on a stationary die carrer plate (11), and at the other end on a supporting plate (13, 11) and which are guiding the movable die carrer plate (12, 112) and which includes actuator units (16, 116), each of which is comprising a cylinder and a piston, with which the injection molding die can be hold under pressure with a great power and can be opened respectively closed with a small power, whereby the piston glands are sliding on the inner surface of the actuator units (16, 116) cylinders and whereby the gaskets (19, 119) which border the high pressure spaces are adjoining the surface of the tie rods, characterized in that the pistons (16b, 116b) of the actuator units (16, 116) supported and centered by the supporting plate (13, 113), constitute a unit for movement with the movable die carrier plate (12, 112) whereby the gaskets (19, 119) are positioned within the stationary cylinder cover (16d) respectiveley cylinderbases (116g) which are adjoining the supporting plate (13, 113).

2. Die closing unit as defined in claim 1, characterized in that the pistons (16b) are joined with the movable die carrier plate (12) by shells (16f), the length of which is calculated for a maximum of the movement for the opening-stroke of the actuators (16).

3. Die closing unit as defined in claim 1 or 2, characterized in that the pistons (16b) are adjoining the cylinder covers of the cylinders (16a) and centered on the supporting plate (13), if the die (15) is opened.

4. Die closing unit as defined in claim 1 to 3, characterized in that the unit for movement consisting of the movable die carrier plate (12), the shells (16f) and the pistons (16b) is conducted by conducting-bushes (27f) in the area of the movable die carrier plate (12) and is conducted on the inner surfaces of the shells (16f) in the area of the pistons (16b), whereby the shells (16f) are fastened and centered on the movable die carrier plate (12) by the flanges (16f') extending radially.

5. Die closing unit as defined in anyone of claims two through four, characterized in that the pistons (16b) are screwed up with the shells (16f) and that the cylinders (16a) of the actuator units (16) are adjoining the front face of the supporting plate (13).

6. Die closing unit as defined in claim 1 to 5, characterized in that the supporting plate furnished with a central opening (34) and supporting the tie rods (14) is fastened on the machine base (10) by a base (13d).

7. Die closing unit as defined in claim 2 to 6, characterized in that the tie rod (14) is surrounded by the shell (16f) by forming a ring-shaped space, which is bordered by the conducting bush (27) and which extends in axially direction about to the area of the cylinder space (32).

8. Die closing unit as defined in claim 1 to 7, characterized in that the cylinder covers (16d) are axially supported on a ring-shaped sholder (30) of the tie rod (14) and are pressed to this sholder by means of a nut (36) which is screwed to the tie rod (14) and is supported on the supporting plate (13), and in that the cylinder covers (16c) on the side of the mold are braced with the supporting plate by means of tension poles (29).

9. Die closing unit as defined in claim 1 to 4, characterized in that the cylinders (116) of the actuator units are formed by pot-like pieces of cast iron, the cylinder bases (116g) of which are centered on the supporting plate (113) by plane joining faces, whereby the cylinderbases (116g), each of which is supported on a ring-shaped sholder (130) of the tie rod (114), are braced with the supporting plate (113) by nuts (117).

10. Die closing unit as defined in claim 9, characterized in that the pistons (116b) are adjoining ringshaped sholders (116h) of the shells (116f).

## Revendications

1. Groupe de fermeture de moule dans une machine à mouler la matière plastique par injection, qui comporte des tirants (14), dont une extrémité est fixée sur une plaque porte-moule fixe (11) et dont l'autre extrémité est fixée sur une plaque support (13, 113) et qui guident la plaque porte-moule mobile (12, 112), ainsi que des vérins (16, 116) traversés par ces tirants et soutenus axialement par eux, lesquels vérins maintiennent le moule d'injection fermé avec une grande force et l'ouvrent et/ou le ferment avec une force plus faible, d'où il résulte que les garnitures de piston glissent sur la surface intérieure des cylindres des vérins (16, 116) et que les bagues d'étanchéité (19, 119) délimitant les volumes haute pression adhèrent à ces tirants, caractérisé en ce que les pistons (16b, 116b) des vérins (16, 116) soutenus et centrés par la plaque support (13, 113) constituent une unité se déplaçant avec la plaque porte-moule mobile (12, 112), d'où il résulte que les bagues d'étanchéité (19, 119) sont disposées à l'intérieur des couvercles de cylindre (16d) ou des fonds de cylindre (116g) fixes et adjacents à la plaque d'appui (13, 113).

2. Groupe de fermeture de moule selon la revendication 1, caractérisé en ce que les pistons (16b) sont reliés à la plaque porte-moule mobile (12) par l'intermédiaire de manchons (16f), dont la longueur est étudiée pour permettre la course d'ouverture maximale des vérins (16).

3. Groupe de fermeture de moule selon la revendication 1 ou 2, caractérisé en ce que, lorsque le moule (15) est ouvert, les pistons (16b) sont adjacents aux couvercles (16d) des cylindres (16a) correspondants centrés sur la plaque support (13).

4. Groupe de fermeture de moule selon l'une des revendications précédentes, caractérisé en ce que l'ensemble mobile constitué par la plaque porte-moule mobile (12), les manchons (16f) et les pistons (16b) est guidé par des douilles de guidage (27) dans la zone de la plaque porte-moule mobile (12) et sur la surface intérieure des manchons (16f) dans la zone des pistons (16b), d'où il résulte que les manchons (16f) sont centrés et fixés sur la plaque porte-moule (12) au moyen d'une collerette radiale d'extrémité (16f).

5. Groupe de fermeture de moule selon l'une des revendications 2 à 4, caractérisé en ce que les pistons (16b) sont vissés dans les manchons (16f) et que les cylindres (16a) des vérins (16) sont adjacents à la face frontale de la plaque support (13).

6. Groupe de fermeture de moule selon l'une des revendications précédentes, caractérisé en ce que la plaque support, présentant une ouverture centrale (34) et soutenant quatre tirants (14) est fixé par une base (13a) sur le socle (10) de la machine.

7. Groupe de fermeture de moule selon l'une des revendications 2 à 6, caractérisé en ce que le manchon (16f) entoure le tirant (14) en formant un espace annulaire (26) qui est délimité par la douille de guidage (27) et qui, lorsque le moule est fermé, s'étend axialement jusqu'à environ la hauteur de la chambre du cylindre (32).

8. Groupe de fermeture de moule selon l'une des revendications précédentes, caractérisé en ce que les couvercles de cylindre (16d) sont chacun appliqués en butée contre un épaulement annulaire (30) du tirant associé et y sont pressés par un écrou (17), qui se visse sur le tirant (14) et est adjacent à la plaque support (13) et en ce que, du côté du moule, les couvercles de cylindre (16c) sont bridés sur la plaque support (13) à l'aide de barres de traction (29).

9. Groupe de fermeture de moule selon l'une des revendications 1 à 4, caractérisé en ce que les pièces en fonte en forme de pot, dont les fonds (116g) sont centrés sur la plaque support (113) par des surfaces de positionnement planes, d'où il résulte que chaque fond de cylindre (116g) est bridé par en écrou (117) sur la plaque support (113) en étant supporté par un épaulement annulaire (130) du tirant correspondant (114).

10. Groupe de fermeture de moule selon la revendication 9, caractérisé en ce que les pistons (116b) sont logés dans des décrochements annulaires (116h) des manchons (116f).

Fig.1

Fig. 2

Fig. 3

29a

14

29

16

16c

16f

13

34

12

17

14

16d

13a

31

13a'

10a

10

Fig. 4

29a

12

14

17

16d

13

31

13a'

10

10a

Fig.5